# EUROPÄISCHE PATENTSCHRIFT

(11) **EP 3 492 145 B1**
(45) Veröffentlichungstag und Bekanntmachung des Hinweises auf die Patenterteilung: **08.05.2024**
(21) Anmeldenummer: 18207570.5
(22) Anmeldetag: 21.11.2018
(51) Int. Cl.: A62B 1/02, F03D 80/50

(54) **PERSONENRETTUNGSSYSTEM UND VERFAHREN ZUR EVAKUIERUNG VON PERSONEN AUS EINEM BAUWERK**
PERSON RESCUE SYSTEM AND METHOD FOR EVACUATING PEOPLE FROM A BUILDING
SYSTÈME DE SAUVETAGE DES PERSONNES ET PROCÉDÉ D'ÉVACUATION DES PERSONNES D'UN BÂTIMENT

(30) Priorität: 30.11.2017 DE 102017011083
(43) Veröffentlichungstag der Anmeldung: 05.06.2019
(73) Patentinhaber: Siemens Gamesa Renewable Energy Service GmbH, 20097 Hamburg (DE)
(72) Erfinder: BRAMKAMP, Jens, 24983 Handewitt (DE)
(74) Vertreter: Schlotter, Alexander Carolus Paul

(56) Entgegenhaltungen:
- EP-A2- 1 624 186
- WO-A2-2006/085790
- GB-A- 2 025 350

## Beschreibung

Die Erfindung betrifft ein Personenrettungssystem zur Evakuierung von Personen aus einem Bauwerk, umfassend eine bauwerksseitig eingebaute Halterung und einen Rettungskorb. Ferner betrifft die Erfindung eine Windenergieanlage mit einem solchen Personenrettungssystem. Die Erfindung betrifft außerdem ein Verfahren zur Evakuierung von Personen aus einem Bauwerk mit einem Personenrettungssystem, welches eine bauwerksseitig eingebaute Halterung und einen Rettungskorb umfasst.

Die Evakuierung von Personen aus großen Höhen, wie zum Beispiel aus Windkraftanlagen, Hochhäusern oder auch großen Schiffen, stellt nach wie vor eine große technische Herausforderung dar. Eine Möglichkeit, Personen aus großen Höhen zu evakuieren, welche außerhalb der Reichweite einer typischen Drehleiter der Feuerwehr liegt, ist die Rettung mittels eines Helikopters. Bei einem Brand, beispielsweise in einem Maschinenhaus einer Windenergieanlage, kommt jedoch vielfach eine Rettung mittels eines Helikopters nicht infrage. Zum einen ist oft die Zeitspanne, binnen der der Helikopter am Einsatzort ist, zu lang, zum anderen ist der Betrieb eines Helikopters in der Nähe eines Brandherdes zu risikoreich.

Aus der EP 1 624 186 A2 ist eine Windenergieanlage mit einer Rettungskapsel bekannt. Die Rettungskapsel ist im unteren hinteren Bereich in das Maschinenhaus integriert. In einem Notfall bringt sich das Personal vom Maschinenhaus in diese Rettungskapsel in Sicherheit und seilt diese über ein gebremst abrollendes Halteseil in die Tiefe ab.

Die WO 2006/085790 A2 betrifft eine Vorrichtung für einen Notabstieg von einem Gebäude, wobei im Notfall die Vorrichtung durch Ziehen eines Handgriffs von einem kompakten Aufbewahrungszustand in einen Zustand zum Einsteigen in eine Kabine umgewandelt wird, die an einem Teleskopausleger befestigt ist, ein Hebel von der Kabine aus betätigt wird, wodurch Mittel zum Verschieben eines Fensters oder eines Teils einer Außenwand innerhalb eines Gebäudes ausgelöst werden, und der in einem Winkel von 8 ° -12 ° zur Horizontalen geneigte Teleskopausleger die Kabine durch die so geöffnete Öffnung trägt.

Aufgabe der Erfindung ist es, ein verbessertes Personenrettungssystem, eine Windenergieanlage mit einem solchen Personenrettungssystem sowie ein verbessertes Verfahren zur Evakuierung von Personen aus einem Bauwerk anzugeben.

Die Aufgabe wird gelöst durch ein Personenrettungssystem mit den Merkmalen des Anspruchs 1 zur Evakuierung von Personen aus einem Bauwerk, umfassend eine bauwerksseitig eingebaute Halterung und einen Rettungskorb, wobei das Personenrettungssystem dadurch fortgebildet ist, dass die bauwerksseitige Halterung permanent mit dem Bauwerk verbunden ist und einen Ausleger umfasst, an dessen freiem Ende der Rettungskorb befestigt ist, wobei der Ausleger selbstausfahrend ausgestaltet ist.

Das Personenrettungssystem gemäß Aspekten der Erfindung beruht auf der Überlegung, dass es im Notfall für die Evakuierung von Personen aus einem Bauwerk zunächst die wichtigste Maßnahme ist, die Personen aus dem Gefahrenbereich zu transportieren. Durch diese erste Maßnahme wird Zeit für die darauf folgenden Rettungsmaßnahmen gewonnen. In einem angenommenen Szenario, in dem ein Feuer in einem Maschinenhaus einer Windkraftanlage ausbricht, können mit dem Personenrettungssystem die Personen aus dem Gefahrenbereich, in welchem beispielsweise eine bedrohliche Rauchbelastung oder Gefahr durch Flammen herrscht, schnell heraus transportiert werden. Da der Ausleger selbstausfahrend ausgestaltet ist, ist das System autonom, also nicht davon abhängig, dass weitere Systeme, beispielweise eine Stromversorgung im Maschinenhaus der Windenergieanlage, noch intakt sind. Das System ist daher sehr zuverlässig, sicher und robust.

Der Ausleger ist selbstausfahrend ausgestaltet, d. h. er benötigt keine externe Energiezufuhr, um in den ausgefahrenen Zustand zu fahren. Hierzu umfasst der Ausleger beispielsweise eine Feder oder eine vergleichbare Vorspannvorrichtung, die im eingefahrenen Zustand des Auslegers vorgespannt ist. Es ist ebenso vorgesehen, dass die erforderliche Energie als potentielle Energie gespeichert wird, beispielsweise mit Hilfe eines Gewichts. Die Vorspannvorrichtung liefert die erforderliche Antriebskraft zum Ausfahren des Auslegers im Gefahrenfall. Das Ausfahren und die gegensätzliche Bewegung, also insbesondere das Einfahren des Auslegers, ist insbesondere reversibel. Somit ist das Personenrettungssystem wiederverwertbar, bei einer Fehlbenutzung entstehen keine nennenswert großen Kosten.

Im Kontext der vorliegenden Beschreibung wird unter einem Bauwerk beispielsweise ein Gebäude, wie etwa ein Wohnhaus, Geschäftshaus, Fabrikgebäude, aber auch vertikal ausgerichtete Bauwerke, zum Beispiel Türme, Masten, Windenergieanlagen und dergleichen, verstanden. Unter einem Bauwerk soll ebenfalls ein Offshore-Bauwerk, wie beispielsweise Bohrinseln, Förderplattformen, Offshore-Windenergieanlagen, Umspann- und Forschungsplattformen, egal ob schwimmend oder auf dem Meeresgrund gegründet, verstanden werden. Ferner sollen unter dem Begriff "Bauwerk" insbesondere auch große schwimmende Fahrzeuge, wie beispielsweise große Fracht- oder Personenschiffe, beispielsweise Kreuzfahrtschiffe, verstanden werden.

Die bauwerksseitig eingebaute Halterung ist beispielsweise ein brandsicherer Einbaurahmen. Ein solcher Einbaurahmen ist wegen seiner flachen Bauform vorteilhaft. Der Ausleger des Personenrettungssystems ist insbesondere näherungsweise in einer horizontalen Ebene ausfahrbar. So ergibt sich bei ausgefahrenem Ausleger vorteilhaft ein horizontaler Abstand zur Gefahrenquelle, was die Personen in eine temporär sichere Position bringt. Ein waagerechter Abstand zur Gefahrenquelle hat gegenüber einem vertikalen Abstand den Vorteil, dass die im Rettungskorb befindlichen Personen nicht durch gegebenenfalls herabfallende brennende Gegenstände gefährdet werden können. Außerdem bietet ein waagerechter Abstand zur Gefahrenquelle die Möglichkeit, dass die Personen mit einem Helikopter aufgenommen werden können, da dieser in einem Abstand zur Gefahrenquelle, beispielsweise einem Feuer und dem dadurch entstehenden Rauch, operieren kann. Zusätzlich kann bei mehrfacher Verwendung des Personenrettungssystems an einem einzigen Objekt eine versetzte Bauweise angewandt werden. Mit anderen Worten sind also mehrere Personenrettungssysteme horizontal gegeneinander versetzt angeordnet. Diese Anordnung bietet den Vorteil, dass beispielsweise bei einem Hochhaus eine gleichzeitige Rettung aus unterschiedlichen Höhen möglich ist.

Gemäß einer vorteilhaften Ausführungsform ist vorgesehen, dass der Ausleger zwischen einer eingefahrenen Anfangsposition und einer ausgefahrenen Endposition verfahrbar ist und von der Anfangsposition in Richtung der Endposition selbstausfahrend ausgestaltet ist, wobei der Ausleger in der Endposition den Rettungskorb in einem vorbestimmten horizontalen Abstand von dem Bauwerk positioniert.

Es ist in diesem Zusammenhang insbesondere vorgesehen, dass der Ausleger in der Anfangsposition so positioniert ist, dass Personen das Bauwerk verlassen und den Rettungskorb besteigen können. Der vorbestimmte Abstand im ausgefahrenen Zustand wird beispielsweise abhängig von den betrachteten Gefahrenszenarien gewählt.

Erfindungsgemäß ist vorgesehen, dass der Ausleger zumindest zwei Segmente umfasst, von denen ein erstes Segment in einer näherungsweise horizontalen Ebene von dem Bauwerk weg-schwenkbar an der Halterung befestigt ist, wobei in einer Ausführung das zweite Segment in einer näherungsweise horizontalen Ebene schwenkbar an dem ersten Segment befestigt ist oder das zweite Segment gegenüber dem ersten Segment teleskopartig ausfahrbar ist.

Das erste Segment des Auslegers ist beispielsweise in einer Ebene schwenkbar, welche weniger als 10°, beispielsweise zwischen 5° und 10°, gegenüber einer horizontalen Ebene geneigt ist. Durch die Neigung dieser Schwenkebene schwenkt der Ausleger bereits durch sein Eigengewicht und das Gewicht des Rettungskorbs sowie die darin vorhandenen Personen selbsttätig aus, ohne dass hierzu weitere Antriebsmaßnahmen vorgesehen werden müssen. Selbstverständlich ist es ebenfalls und gegebenenfalls zusätzlich vorgesehen, dass der Ausleger selbstausfahrend ausgestaltet ist, indem dieser beispielsweise entsprechend vorgespannte Federn, Druckgasvorräte oder dergleichen umfasst, welche dafür sorgen, dass der Ausleger ausfährt. Die Ausfahrbewegung kann sowohl ein teleskopartiges Ausfahren als auch ein Herausschwenken sein. Dies gilt nicht nur für das erste Segment, sondern auch für das zweite Segment. Bei der Kombination eines teleskopartig ausfahrenden zweiten Segments und eines ausschwenkenden ersten Segments vollzieht der Ausleger eine kombinierte Schwenk- und Linearbewegung.

Das Personenrettungssystem ist ferner insbesondere dadurch fortgebildet, dass der Rettungskorb zusammenfaltbar ist, wobei der Rettungskorb insbesondere in eine Richtung zusammenfaltbar ist, die zumindest näherungsweise parallel zu einer Durchgangsrichtung durch eine Zugangstür des Rettungskorbs orientiert ist.

Ein zusammenfaltbarer Rettungskorb (auch als Rettungsfaltkorb bezeichnet) ist besonders vorteilhaft, da dieser im unbenutzten Zustand platzsparend aufbewahrbar ist. Insbesondere in Kombination mit einem Einbaurahmen ergibt sich eine flache Bauform des Personenrettungssystems. Dieses kann problemlos im Bereich einer Außentür oder Außenluke eines Gebäudes oder auch einer Gondel einer Windenergieanlage angebracht oder in das Gebäude integriert werden. Zum Schutz vor Witterungseinflüssen ist das Personenrettungssystem von der Außenseite her beispielsweise mit einer Haube abgedeckt, welche im Notfall abgeworfen oder aufgeschwenkt wird.

Ferner ist das Personenrettungssystem dadurch fortgebildet, dass der Rettungskorb aufblasbar, insbesondere selbstaufblasbar, ist. Auch ein aufblasbarer Rettungskorb ist platzsparend aufbewahrbar, solange dieser nicht benutzt wird. Gleichzeitig bietet ein aufblasbarer Rettungskorb einen gewissen Schutz der Insassen vor Schlägen, beispielsweise bei der Kollision des Rettungskorbs mit weiteren Gegenständen. Gleichzeitig ermöglicht die aufblasbare Ausführung, bei einer Verwendung auf Wasserflächen, den Schutz vor Ertrinken und Erfrieren und sichert somit das Überleben auf dem Wasser.

Gemäß einer weiteren Ausführungsform ist das Personenrettungssystem dadurch fortgebildet, dass eine Seilwinde mit einem Windenseil umfasst ist, die am freien Ende des Auslegers montiert ist oder deren Windenseil über eine am freien Ende des Auslegers vorhandene Umlenkvorrichtung, beispielsweise eine Umlenkrolle, geführt ist, wobei der Rettungskorb an einem freien Ende des Windenseils der Seilwinde befestigt ist und der Rettungskorb mit Hilfe der Seilwinde herablassbar ist. Die Seilwinde ist insbesondere eine automatische gebremste Seilwinde und umfasst hierzu beispielsweise eine Fliehkraftbremse.

Vorteilhaft ist es bei einem solchen Personenrettungssystem möglich, dass die Personen, welche sich in dem Rettungskorb in Sicherheit gebracht haben, die Seilwinde auslösen und den Rettungskorb herablassen. Die automatisch, insbesondere durch eine mechanische Einrichtung, gebremste Seilwinde arbeitet autonom, ohne dass es im Gefahrenfall erforderlich ist, dass das Personenrettungssystem beispielsweise auf eine Stromversorgung zurückgreifen muss.

Bei dem Personenrettungssystem gemäß den zuvor genannten Ausführungsformen wird in einem ersten Schritt ein ausreichend großer horizontaler Sicherheitsabstand zur Gefahrenquelle erzeugt. In einem zweiten Schritt erfolgt die Bergung der Personen durch Abseilen in dem Rettungskorb. Es ist ebenso vorgesehen, dass anstatt eines Abseilens des Rettungskorbs dieser beispielsweise von einem Helikopter aufgenommen wird. In diesem Fall kann das Abseilen entfallen. Das Personenrettungssystem ist einfach zu bedienen, robust und zuverlässig.

Es ist ferner insbesondere vorgesehen, dass an dem Rettungskorb Schwimmer montiert sind oder der Rettungskorb selbst, insbesondere wenn es sich um einen aufblasbaren Rettungskorb handelt, nach der Art einer Rettungsinsel, wie sie zum Überleben auf See bekannt ist, ausgestaltet ist. Mit einem solchen Personenrettungssystem können bevorzugt Offshore-Windenergieanlagen ausgerüstet werden. Es ist dann vorteilhaft möglich, dass die Personen in der Rettungsinsel des Personenrettungssystems verbleiben, bis diese Rettungsinsel beispielsweise von einem Helikopter oder einem herbeigeeilten Schiff aufgenommen wird. Dies gilt in gleicher Weise selbstverständlich für den Einsatz des Personenrettungssystems auf anderen Offshore-Bauwerken, wie beispielsweise Förderplattformen, Bohrinseln, Umspann- oder Forschungsplattformen sowie auch für große schwimmende Bauten wie Fracht- oder Personenschiffe.

Die Aufgabe wird außerdem gelöst durch eine Windenergieanlage mit einem Personenrettungssystem nach einer oder mehreren der zuvor genannten Ausführungsformen zur Evakuierung von Personen aus der Windenergieanlage. Dabei ist die Halterung permanent mit der Windenergieanlage, insbesondere mit einem tragenden Bauteil der Gondel, ferner insbesondere mit einem Hauptmaschinenträger, verbunden.

Die Verbindung der Halterung mit dem Hauptmaschinenträger stellt eine besonders zuverlässige und sichere Lösung dar. Bei der Windenergieanlage handelt es sich bevorzugt um eine Offshore-Windenergieanlage.

Im Übrigen treffen auf die Windenergieanlage gleiche oder ähnliche Vorteile zu, wie sie bereits im Hinblick auf das Personenrettungssystem selbst erwähnt wurden.

Die Aufgabe wird ferner gelöst durch ein Verfahren mit den Merkmalen des Anspruchs 8 zur Evakuierung von Personen aus einem Bauwerk mit einem Personenrettungssystem, welches eine bauwerksseitig eingebaute Halterung und einen Rettungskorb umfasst, wobei dieses Verfahren dadurch fortgebildet ist, dass die bauwerksseitige Halterung permanent mit dem Bauwerk verbunden ist und das Personenrettungssystem einen Ausleger umfasst, an dessen freiem Ende der Rettungskorb befestigt ist, wobei im Fall der Evakuierung der Ausleger selbsttätig ausfährt.

Auch das Verfahren zur Evakuierung von Personen aus dem Bauwerk beruht auf der Erkenntnis, dass es als Erstmaßnahme äußerst wirkungsvoll ist, die Personen zunächst aus dem Gefahrenbereich horizontal herauszubewegen. Dies hat den Vorteil, dass beispielsweise im Vergleich zu einer Entfernung der Personen aus dem Gefahrenbereich in vertikaler Richtung keine Gefährdung der Personen durch herabfallende brennende Trümmer oder dergleichen entsteht.

Es ist ferner beispielsweise vorgesehen, dass im Fall der Evakuierung der Rettungskorb von einem Helikopter aufgenommen wird.

Im Übrigen treffen auch auf das Verfahren gleiche oder ähnliche Vorteile zu, wie sie bereits im Hinblick auf das Personenrettungssystem selbst erwähnt wurden.

Das Verfahren ist vorteilhaft dadurch fortgebildet, dass Personen das Bauwerk verlassen und den Rettungskorb besteigen, wenn der Ausleger sich in einer eingefahrenen Anfangsposition befindet, und anschließend der Ausleger selbsttätig von der Anfangsposition in eine ausgefahrene Endposition ausfährt und der Ausleger in der Endposition den Rettungskorb in einem vorbestimmten horizontalen Abstand von dem Bauwerk positioniert.

Der Ausleger wird selbsttätig beispielsweise durch Federkraft, durch einen mit Gasdruck betriebenen Antrieb oder dergleichen ausgefahren.

Erfindungsgemäß ist bei dem Verfahren vorgesehen, dass der Ausleger zumindest zwei Segmente umfasst, von denen ein erstes Segment an der Halterung befestigt ist und im Fall der Evakuierung in einer näherungsweise horizontalen Ebene von dem Bauwerk wegschwenkt, wobei in einer Ausführung das zweite Segment an dem ersten Segment befestigt ist und im Fall der Evakuierung in einer näherungsweise horizontalen Ebene von dem Bauwerk wegschwenkt oder das zweite Segment gegenüber dem ersten Segment teleskopartig ausfährt.

Ferner ist insbesondere vorgesehen, dass das Verfahren dadurch fortgebildet ist, dass der Rettungskorb zusammenfaltbar ist, wobei der Rettungskorb insbesondere in eine Richtung zusammenfaltbar ist, die zumindest näherungsweise parallel zu einer Durchgangsrichtung durch eine Zugangstür des Rettungskorbs orientiert ist, und wobei der Rettungskorb im Fall der Evakuierung auseinandergefaltet wird, bevor der Ausleger ausfährt.

Gemäß einer weiteren vorteilhaften Ausführungsform ist ferner vorgesehen, dass der Rettungskorb im Evakuierungsfall aufgeblasen wird, wobei der Rettungskorb insbesondere selbstaufblasbar ist.

Der Rettungskorb ist beispielsweise als Rettungsinsel ausgestaltet. Im Evakuierungsfall wird die Rettungsinsel aufgeblasen und von dem Ausleger in horizontaler Richtung aus der Gefahrenzone herausbewegt.

Ferner ist insbesondere das Verfahren dadurch fortgebildet, dass eine Seilwinde mit einem Windenseil umfasst ist, die am freien Ende des Auslegers montiert ist oder deren Windenseil über eine am freien Ende des Auslegers vorhandene Umlenkvorrichtung, beispielsweise eine Umlenkrolle, geführt ist, wobei im Evakuierungsfall der an einem freien Ende des Windenseils der Seilwinde befestigte Rettungskorb mit Hilfe der Seilwinde herabgelassen wird, nachdem der Ausleger ausgefahren wurde.

Dabei erfolgt insbesondere ein gebremstes Abseilen des Rettungskorbs durch die Seilwinde. Die Seilwinde ist hierzu entsprechend ausgestaltet, beispielsweise mit einer Fliehkraftbremse versehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
Fig. 1 ein Personenrettungssystem in schematisch vereinfachter perspektivischer Darstellung,
Fig. 2 ein Personenrettungssystem im eingefahrenen Zustand von der Rückseite her in schematisch vereinfachter perspektivischer Darstellung,
Fig. 3 eine schematisch vereinfachte perspektivische Darstellung des eingefahrenen Personenrettungssystems, welches beispielhaft in die Gondel einer Windenergieanlage eingebaut ist, betrachtet von der Außenseite her bei geöffneter Abdeckhaube,
Fig. 4 eine weitere schematisch vereinfachte perspektivische Darstellung eines Personenrettungssystems, welches bereit für das Einsteigen der Personen ist, nachdem der faltbare Rettungskorb ausgeklappt wurde,
Fig. 5 eine schematisch vereinfachte perspektivische Darstellung eines Personenrettungssystems zu Beginn des Ausfahrvorgangs des Auslegers,
Fig. 6 eine schematisch vereinfachte perspektivische Darstellung eines weiteren Personenrettungssystems mit voll ausgefahrenem Ausleger und
Fig. 7 eine schematisch vereinfachte perspektivische Darstellung einer Windenergieanlage mit einem Personenrettungssystem.

In den Zeichnungen sind jeweils gleiche oder gleichartige Elemente und/oder Teile mit denselben Bezugsziffern versehen, so dass von einer erneuten Vorstellung jeweils abgesehen wird.

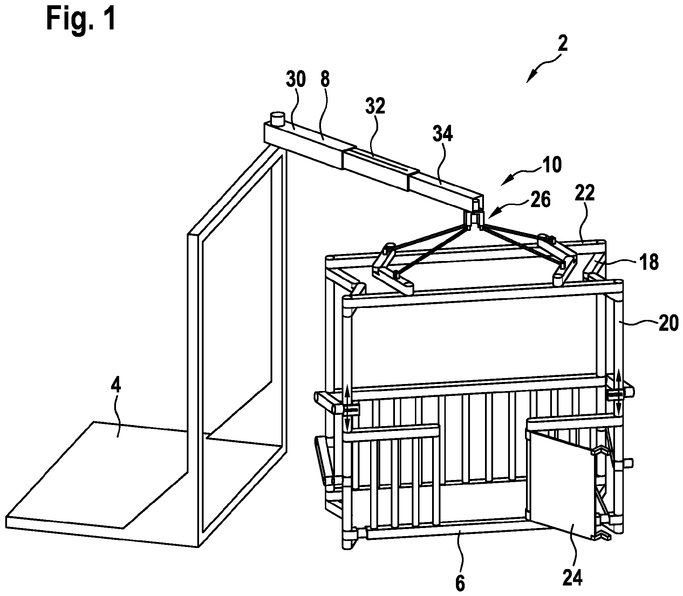

Fig. 1 zeigt ein Personenrettungssystem 2 zur Evakuierung von Personen aus einem Bauwerk. Dieses umfasst eine bauwerksseitig eingebaute Halterung 4. Beispielhaft handelt es sich bei dieser Halterung 4 um einen brandsicheren Einbaurahmen. Ferner umfasst das Personenrettungssystem 2 einen Rettungskorb 6, der ebenfalls beispielhaft zusammenfaltbar ist. Der Rettungskorb 6 ist gemäß weiterer Ausführungsbeispiele als Rettungskapsel oder auch als aufblasbare Rettungsvorrichtung ausgestaltet.

Die bauwerksseitige Halterung 4 ist permanent mit dem Bauwerk verbunden. Beispielsweise ist der als Halterung 4 dargestellte brandsichere Einbaurahmen mit einem Hauptmaschinenträger der Gondel einer Windenergieanlage verbunden. Es ist ebenso vorgesehen, dass der als Halterung 4 dienende Einbaurahmen in einem Bauwerk, beispielsweise einem hohen Gebäude, Turm oder dergleichen, eingebaut ist. Beispielsweise ist er in die Tragstruktur des Gebäudes eingegossen oder eingemauert und in eine Außenwand integriert. Die bauwerksseitige Halterung 4 umfasst einen Ausleger 8, der schwenkbar an der Halterung befestigt ist. An einem freien Ende 10 des Auslegers 8 ist der Rettungskorb 6 befestigt. Der Ausleger 8 ist selbstausfahrend ausgestaltet. Im Kontext der vorliegenden Beschreibung wird unter "selbstausfahrend" stets auch ein Vorgang verstanden, bei dem der Ausleger 8 oder ein Segment davon von selbst ausschwenkt oder teleskopartig ausfährt, wobei auch Kombinationen dieser Bewegungen vorgesehen sind.

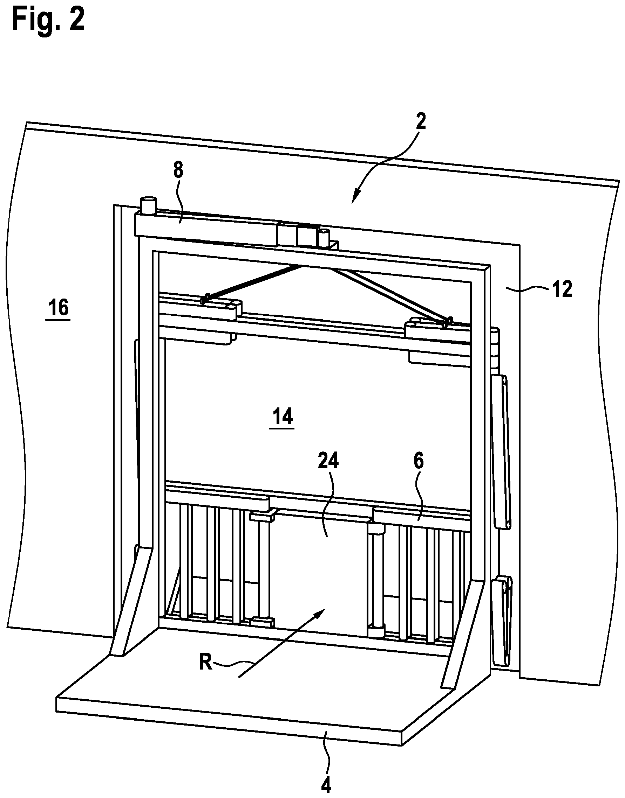

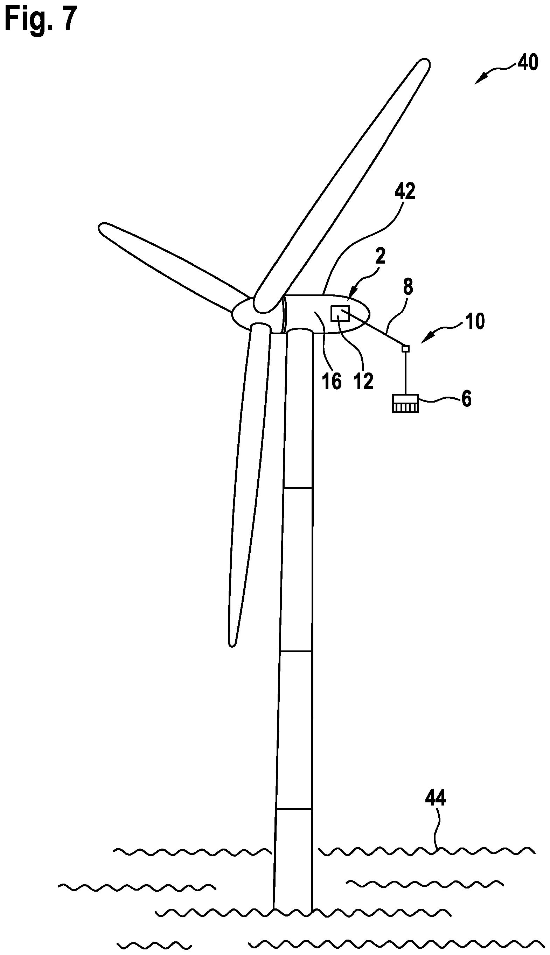

Fig. 2 zeigt das aus Fig. 1 bekannte Personenrettungssystem 2 in einer Einbausituation und im eingefahrenen Zustand von der Innenseite des Gebäudes. Es ist beispielhaft eine Einbausituation dargestellt, bei der das Personenrettungssystem 2 im Bereich einer Außenluke 12 oder eines Fensters in das Bauwerk integriert ist. Die Außenluke 12 ist mit einer Abdeckhaube 14 verschlossen, deren Innenseite sichtbar ist. Der als Halterung 4 dienende Einbaurahmen ist so angebracht, dass der zusammengefaltete Rettungskorb 6 zumindest näherungsweise bündig mit einer Außenwand 16 des Gebäudes, beispielsweise einer äußeren Verkleidung einer Gondel 42 einer Windenergieanlage 40, abschließt (vgl. auch Fig. 7). Das dargestellte Personenrettungssystem 2 befindet sich in Fig. 2 im eingefahrenen Zustand, d.h. der Rettungskorb 6 ist zusammengefaltet und der Ausleger 8 befindet sich in einer eingefahrenen Anfangsposition.

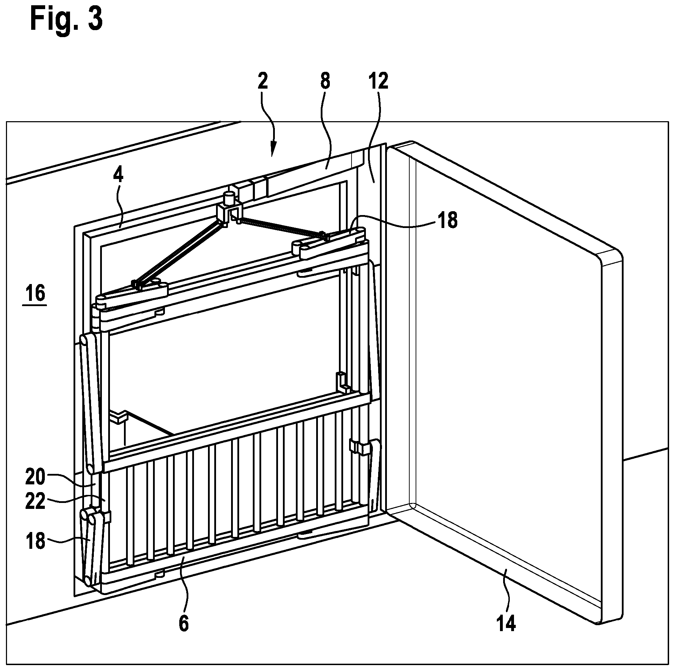

Im Fall der Evakuierung von Personen, beispielsweise aus der Gondel 42 der Windenergieanlage 40, wird durch einen Stoß oder durch Ausübung einer Kraft von innen an den zusammengefalteten Rettungskorb 6 ein Prozess ausgelöst, bei dem sich der Rettungskorb 6 von selbst ausfaltet. Zunächst oder während dieses Prozesses wird die Abdeckhaube 14 aufgeschwenkt oder abgeworfen. Diese Situation zeigt die weitere schematisch vereinfachte perspektivische Darstellung in Fig. 3, in der das Personenrettungssystem 2 von der Außenseite des Gebäudes durch die geöffnete Außenluke 12 sichtbar ist.

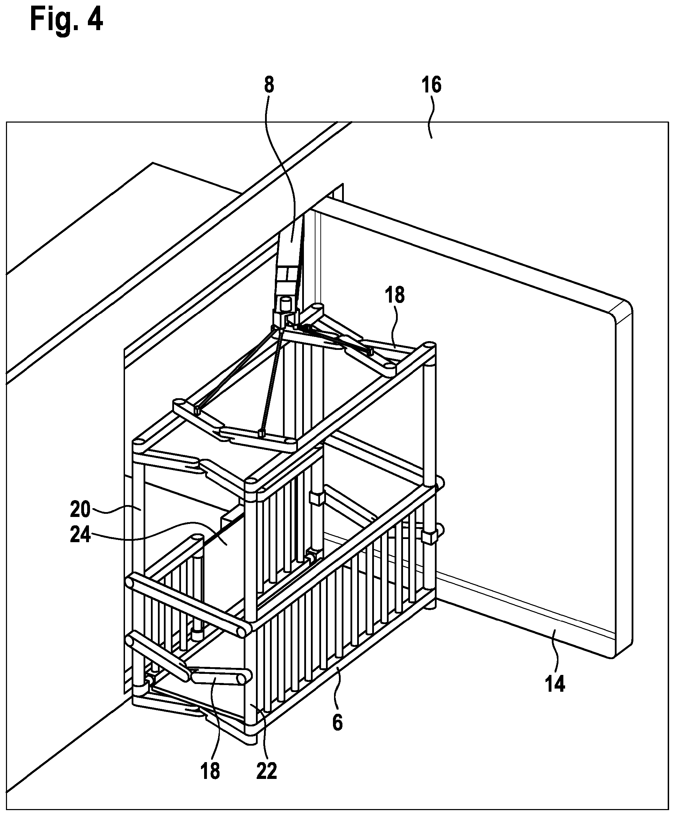

In einem nächsten Schritt wird der Rettungskorb 6 vollständig und vorzugsweise selbstständig ausgefaltet. Hierzu sind beispielsweise gelenkartige Verbindungsstreben 18, von denen aus Gründen der Übersichtlichkeit lediglich einige mit Bezugszeichen versehen sind, zwischen einem inneren Rahmen 20 und einem äußeren Rahmen 22 des Rettungskorbs 6 vorgesehen. Der Rettungskorb 6 wird beispielsweise manuell ausgefaltet oder faltet sich selbsttätig auseinander, wenn eine entsprechende Vorrichtung betätigt wird. Für das selbsttätige Auseinanderfalten des Rettungskorbs 6 ist beispielsweise vorgesehen, dass die gelenkartigen Verbindungsstreben 18 mit entsprechenden vorgespannten Federmechanismen ausgestaltet sind, so dass sie selbsttätig von ihrer in Fig. 3 dargestellten eingefahrenen Position in die in Fig. 4 gezeigte ausgefahrene Position ausfahren.

Der Rettungskorb 6 umfasst außerdem eine Zugangstür 24 (vgl. auch Fig. 1 und 2), welche den zu rettenden Personen den Übertritt in den Rettungskorb 6 erleichtert. Der Rettungskorb 6 ist bevorzugt in eine Richtung zusammenfaltbar, welche zumindest näherungsweise parallel zu einer Durchgangsrichtung R (vgl. Fig. 2) durch die Zugangstür 24 beim Betreten des Rettungskorbs 6 orientiert ist.

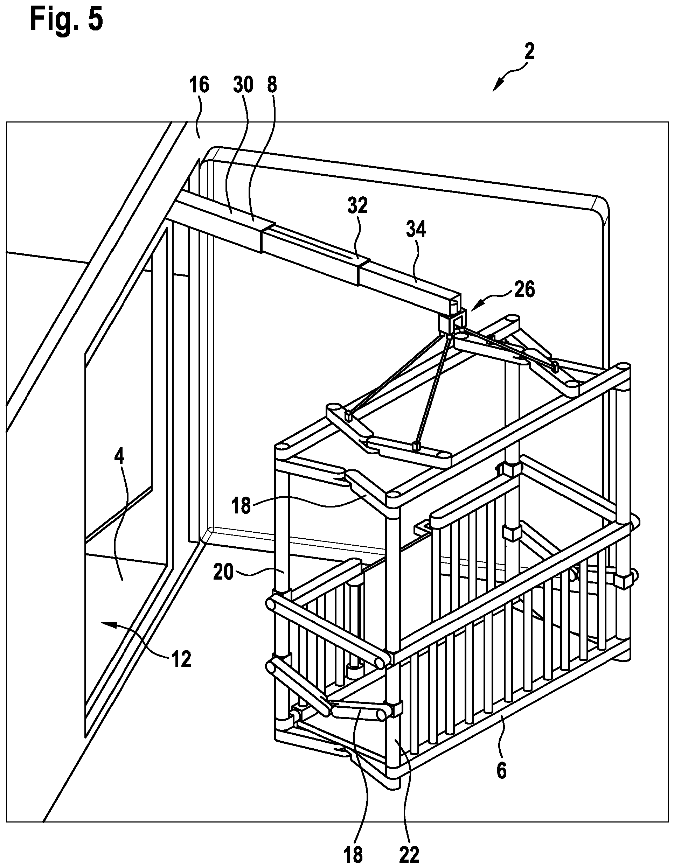

Nachdem die Personen den Rettungskorb 6 betreten und die Zugangstür 24 geschlossen haben, betätigen diese eine Auslösevorrichtung, mit welcher der Rettungskorb 6 vom Gebäude getrennt und der Ausleger 8, der selbstausfahrend ausgestaltet ist, von einer eingefahrenen Anfangsposition in eine ausgefahrene Endposition selbsttätig verfährt. Fig. 5 zeigt eine weitere schematisch vereinfachte perspektivische Darstellung des Personenrettungssystems 2 zu Beginn dieses Vorgangs.

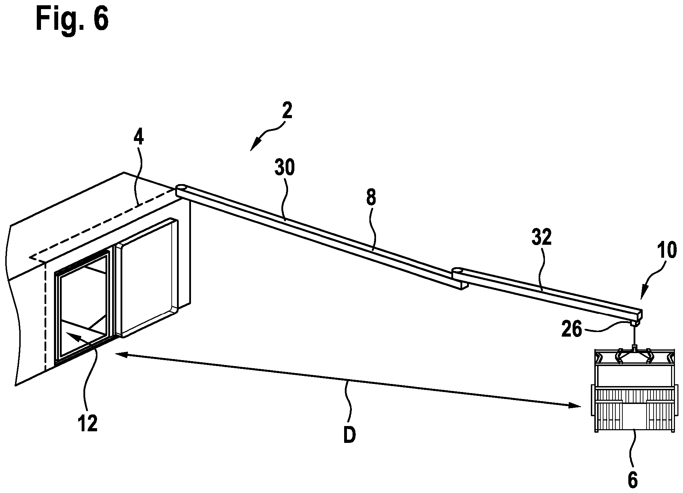

Fig. 6 zeigt ein weiteres Personenrettungssystem 2 mit voll ausgefahrenem Ausleger, welcher sich in der ausgefahrenen Endposition befindet. In der ausgefahrenen Endposition ist der Rettungskorb 6 in einem vorbestimmten horizontalen Abstand D vom Bauwerk positioniert. Dieser Abstand D beträgt beispielsweise 5 bis 10 Meter. In der ausgefahrenen Endposition kann der Rettungskorb 6 beispielsweise über eine am freien Ende 10 des Auslegers 8 vorhandene Seilwinde 26 herabgelassen werden. Alternativ ist es möglich, dass der Rettungskorb 6 von einem Helikopter aufgenommen wird.

Der Ausleger 8 umfasst zumindest zwei Segmente, nämlich zumindest ein erstes Segment 30 und ein zweites Segment 32. Das erste Segment 30 ist in einer näherungsweise horizontalen Ebene, also einer leicht gegenüber der Horizontalen geneigten Ebene, oder in einer horizontalen Ebene schwenkbar an der Halterung 4 befestigt. Das zweite Segment 32 ist bei dem in Fig. 6 gezeigten Ausführungsbeispiel schwenkbar an einem der Halterung 4 abgewandten Ende des ersten Segments 30 befestigt. Beide Segmente 30, 32 führen eine Schwenkbewegung aus, um den Rettungskorb 6 in dem vorbestimmten Abstand D vom Bauwerk zu platzieren.

Gemäß dem in den Fig. 1 bis 5 gezeigten Ausführungsbeispielen umfasst der Ausleger 8 beispielhaft drei Segmente, nämlich ein erstes Segment 30, ein zweites Segment 32 und ein drittes Segment 34. Das erste Segment 30 ist wiederum schwenkbar an dem Rahmen 4 befestigt. Es schwenkt in einer näherungsweise horizontalen Ebene oder in einer horizontalen Ebene aus. Da der Ausleger 8 selbstausfahrend ausgestaltet ist, ist beispielsweise eine Feder vorgesehen, welche in der eingefahrenen Anfangsposition des Auslegers 8, wie sie die Fig. 2 und 3 zeigen, vorgespannt ist. Wird eine entsprechende Auslösevorrichtung betätigt, so schwenkt der Ausleger 8 unter Entlastung dieser Feder in die in Fig. 5 gezeigte Position. Der Ausleger 8 umfasst neben dem ersten Segment 30 zwei weitere Segmente 32, 34, welche gegenüber dem ersten Segment 30 teleskopartig ausfahrbar sind. Hierzu sind die Segmente 32, 34 wiederum beispielsweise mittels einer vorgespannten Feder in der eingefahrenen Anfangsposition gehalten, bei Auslösen einer entsprechenden Betätigungsvorrichtung fahren die Segmente 32, 34 selbsttätig aus.

Es kann ebenso vorgesehen sein, dass der Ausleger 8 nicht in einer exakt horizontalen Ebene gegenüber der Halterung 4 schwenkt. Ist die ausgefahrene Endposition beispielsweise geringfügig tiefer gelegen als die eingefahrene Anfangsposition, so wird sich der Ausleger 8 getrieben durch sein Eigengewicht sowie das Gewicht des Rettungskorbs 6 und der darin vorhandenen Personen in die ausgefahrene Endposition bewegen. Diese Maßnahme ist beispielsweise alternativ oder zusätzlich zu der oben beschriebenen Lösung, bei der beispielsweise vorgespannte Federn oder ein Gasdrucksystem eingesetzt werden, einsetzbar, um den Ausleger 8 selbstausfahrend auszugestalten.

Es ist ferner insbesondere vorgesehen, dass der Rettungskorb 6 aufblasbar ist, wobei dieser insbesondere selbstaufblasbar ausgestaltet ist. Der Rettungskorb 6 ist in diesem Fall ähnlich einer Rettungsinsel, wie sie aus der Offshore-Technik bekannt ist, ausgestaltet. Es ist ebenfalls vorgesehen, dass der Rettungskorb 6 nicht nur in der selbstaufblasbaren Variante, sondern auch in der in den Figuren gezeigten zusammenklappbaren Variante mit Auftriebskörpern versehen ist. So ist es möglich, den Rettungskorb 6 auf dem Wasser abzusetzen, ohne dass die Gefahr besteht, dass dieser untergeht.

Das Personenrettungssystem 2 umfasst in den dargestellten Ausführungsbeispielen eine Seilwinde 26, die am freien Ende 10 des Auslegers 8 montiert ist. Die Seilwinde 26 ist insbesondere selbstbremsend ausgelegt, so dass durch Betätigung einer entsprechenden Freigabevorrichtung die in dem Rettungskorb 6 befindlichen Personen diese Seilwinde auslösen können und der Rettungskorb 6 herabgelassen werden kann. Es ist ebenfalls vorgesehen, dass, abweichend von den Darstellungen in den Zeichnungen, die Winde 26 nicht direkt am freien Ende 10 des Auslegers 8 vorhanden ist, sondern dass ein Windenseil am freien Ende 10 des Auslegers 8 umgelenkt wird, beispielsweise mit Hilfe einer geeigneten Umlenkrolle. Es ist ebenso vorgesehen, dass die Winde 26 am Rettungskorb 6 befestigt ist. Bei einer solchen Ausführungsform ist das Ende des Windenseils am freien Ende des Auslegers 8 befestigt.

Fig. 7 zeigt in schematisch vereinfachter Darstellung eine Windenergieanlage 40 mit einem Personenrettungssystem 2, welches in eine Gondel 42 der Windenergieanlage 40 integriert ist. Beispielhaft dargestellt ist eine Situation, in der der Ausleger 8 des Personenrettungssystems 2 voll ausgefahren ist und der Rettungskorb 6 in Richtung einer Wasseroberfläche 44 herabgelassen wird. Es handelt sich bei der dargestellten Windenergieanlage beispielhaft um eine Offshore-Windenergieanlage. Die Halterung 4 des Personenrettungssystems 2 ist beispielweise mit dem Hauptmaschinenträger innerhalb der Gondel 42 der Windenergieanlage 40 verbunden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Personenrettungssystem
- 4: Halterung
- 6: Rettungskorb
- 8: Ausleger
- 10: freies Ende
- 12: Außenluke
- 14: Abdeckhaube
- 16: Außenwand
- 18: Verbindungsstreben
- 20: innerer Rahmen
- 22: äußerer Rahmen
- 24: Zugangstür
- 26: Seilwinde
- 30: erstes Segment
- 32: zweites Segment
- 34: drittes Segment
- 40: Windenergieanlage
- 42: Gondel
- 44: Wasseroberfläche
- R: Durchgangsrichtung
- D: Abstand

## Patentansprüche

1. Personenrettungssystem (2) zur Evakuierung von Personen aus einem Bauwerk, umfassend eine bauwerksseitig eingebaute Halterung (4) und einen Rettungskorb (6), wobei die bauwerksseitige Halterung (4) permanent mit dem Bauwerk verbunden ist und einen Ausleger (8) umfasst, an dessen freiem Ende (10) der Rettungskorb (6) befestigt ist, wobei der Ausleger (8) selbstausfahrend ausgestaltet ist und zumindest zwei Segmente (30, 32, 34) umfasst, von denen ein erstes Segment (30) in einer näherungsweise horizontalen Ebene von dem Bauwerk weg-schwenkbar an der Halterung (4) befestigt ist.

2. Personenrettungssystem (2) nach Anspruch 1, **dadurch gekennzeichnet, dass** der Ausleger (8) zwischen einer eingefahrenen Anfangsposition und einer ausgefahrenen Endposition verfahrbar ist und von der Anfangsposition in Richtung der Endposition selbstausfahrend ausgestaltet ist, wobei der Ausleger (8) in der Endposition den Rettungskorb (6) in einem vorbestimmten horizontalen Abstand (D) von dem Bauwerk positioniert ist.

3. Personenrettungssystem (2) nach Anspruch 1 oder 2, **dadurch gekennzeichnet, dass** das zweite Segment (32) in einer näherungsweise horizontalen Ebene schwenkbar an dem ersten Segment (30) befestigt ist oder das zweite Segment (32) gegenüber dem ersten Segment (30) teleskopartig ausfahrbar ist.

4. Personenrettungssystem (2) nach einem der Ansprüche 1 bis 3, **dadurch gekennzeichnet, dass** der Rettungskorb (6) zusammenfaltbar ist, wobei der Rettungskorb (6) insbesondere in eine Richtung zusammenfaltbar ist, die zumindest näherungsweise parallel zu einer Durchgangsrichtung (R) durch eine Zugangstür (24) des Rettungskorbs (6) orientiert ist.

5. Personenrettungssystem (2) nach einem der Ansprüche 1 bis 3, **dadurch gekennzeichnet, dass** der Rettungskorb (6) aufblasbar, insbesondere selbstaufblasbar, ist.

6. Personenrettungssystem (2) nach einem der Ansprüche 1 bis 5, **dadurch gekennzeichnet, dass** eine Seilwinde (26) mit einem Windenseil umfasst ist, die am freien Ende (10) des Auslegers (8) montiert ist oder deren Windenseil über eine am freien Ende (10) des Auslegers (8) vorhandene Umlenkvorrichtung geführt ist, wobei der Rettungskorb (6) an einem freien Ende (10) des Windenseils der Seilwinde (26) befestigt ist und der Rettungskorb (6) mit Hilfe der Seilwinde (26) herablassbar ist.

7. Windenergieanlage (40) mit einem Personenrettungssystem (2) nach einem der Ansprüche 1 bis 6 zur Evakuierung von Personen aus der Windenergieanlage (40), wobei die Halterung (4) permanent mit der Windenergieanlage (40), insbesondere mit einem tragenden Bauteil der Gondel (42), ferner insbesondere mit einem Hauptmaschinenträger, verbunden ist.

8. Verfahren zur Evakuierung von Personen aus einem Bauwerk mit einem Personenrettungssystem (2), welches eine bauwerksseitig eingebaute Halterung (4) und einen Rettungskorb (6) umfasst, wobei die bauwerksseitige Halterung (4) permanent mit dem Bauwerk verbunden ist und das Personenrettungssystem (2) einen Ausleger (8) umfasst, an dessen freiem Ende (10) der Rettungskorb (6) befestigt ist, wobei im Fall der Evakuierung der Ausleger (8) selbsttätig ausfährt, wobei der Ausleger (8) zumindest zwei Segmente (30, 32, 34) umfasst, von denen ein erstes Segment (30) an der Halterung (4) befestigt ist und im Fall der Evakuierung in einer näherungsweise horizontalen Ebene von dem Bauwerk weg-schwenkt.

9. Verfahren nach Anspruch 8, **dadurch gekennzeichnet, dass** Personen das Bauwerk verlassen und den Rettungskorb (6) besteigen, wenn der Ausleger (8) sich in einer eingefahrenen Anfangsposition befindet, und anschließend der Ausleger (8) selbsttätig von der Anfangsposition in eine ausgefahrene Endposition ausfährt und der Ausleger (8) in der Endposition den Rettungskorb (6) in einem vorbestimmten horizontalen Abstand (D) von dem Bauwerk positioniert.

10. Verfahren nach Anspruch 8 oder 9, **dadurch gekennzeichnet, dass** das zweite Segment (32) an dem ersten Segment (30) befestigt ist und im Fall der Evakuierung in einer näherungsweise horizontalen Ebene von dem Bauwerk wegschwenkt oder das zweite Segment (32) gegenüber dem ersten Segment (30) teleskopartig ausfährt.

11. Verfahren nach einem der Ansprüche 8 bis 10, **dadurch gekennzeichnet, dass** der Rettungskorb (6) zusammenfaltbar ist, wobei der Rettungskorb (6) insbesondere in eine Richtung zusammenfaltbar ist, die zumindest näherungsweise parallel zu einer Durchgangsrichtung (D) durch eine Zugangstür (24) des Rettungskorbs (6) orientiert ist, und wobei der Rettungskorb (6) im Fall der Evakuierung auseinandergefaltet wird, bevor der Ausleger (8) ausfährt.

12. Verfahren nach einem der Ansprüche 8 bis 10, **dadurch gekennzeichnet, dass** der Rettungskorb (6) im Evakuierungsfall aufgeblasen wird, wobei der Rettungskorb (6) insbesondere selbstaufblasbar ist.

13. Verfahren nach einem der Ansprüche 8 bis 12, **dadurch gekennzeichnet, dass** eine Seilwinde (26) mit einem Windenseil umfasst ist, die am freien Ende (10) des Auslegers (8) montiert ist oder deren Windenseil über eine am freien Ende (10) des Auslegers (8) vorhandene Umlenkvorrichtung geführt ist, wobei im Evakuierungsfall der an einem freien Ende (10) des Windenseils der Seilwinde (26) befestigte Rettungskorb (6) mit Hilfe der Seilwinde (26) herabgelassen wird, nachdem der Ausleger (8) ausgefahren wurde.

## Claims

1. A personal rescue system (2) for evacuating persons from a structure, wherein the personal rescue system (2) comprises a support (4) that is installed on the structure, as well as a rescue cage (6), wherein the support (4) installed on the structure is permanently connected to the structure and comprises a boom (8), to the free end (10) of which the rescue cage (6) is attached, wherein the boom (8) is constructed in such a way that it can extend by itself and that it comprises at least two segments (30, 32, 34), a first segment (30) of which is attached to the support (4) in such a way that it can be pivoted away from the structure in an approximately horizontal plane.

2. The personal rescue system (2) as claimed in claim 1, **characterised in that** the boom (8) can be moved between a retracted starting position and an extended end position and **in that** it is constructed in such a way that it can extend by itself from the starting position in the direction of the end position, wherein, in the end position, the boom (8) positions the rescue cage (6) at a predetermined horizontal distance (D) from the structure.

3. The personal rescue system (2) as claimed in claim 1 or 2, **characterised in that** the second segment (32) is attached to the first segment (30) in such a way that it can be pivoted in an approximately horizontal plane or **in that** the second segment (32) can be extended telescopically relative to the first segment (30).

4. The personal rescue system (2) as claimed in any one of claims 1 to 3, **characterised in that** the rescue cage (6) can be folded up, wherein the rescue cage (6) can be folded up in particular in a direction which is oriented at least approximately parallel with respect to a passage direction (R) through an access door (24) of the rescue cage (6).

5. The personal rescue system (2) as claimed in any one of claims 1 to 3, **characterised in that** the rescue cage (6) is inflatable, in particular self-inflatable.

6. The personal rescue system (2) as claimed in any one of claims 1 to 5, **characterised in that** a cable winch (26) with a winch cable is included, which cable winch (26) is mounted to the free end (10) of the boom (8), or the winch cable of which is guided over a direction change device that is present at the free end (10) of the boom (8), wherein the rescue cage (6) is attached to a free end (10) of the winch cable of the cable winch (26), and the rescue cage (6) can be lowered with the aid of the cable winch (26).

7. A wind energy installation (40) comprising a personal rescue system (2) as claimed in any one of claims 1 to 6 for evacuating persons from the wind energy installation (40), wherein the holder (4) is permanently connected to the wind energy installation (40), in particular to a load-bearing component of the nacelle (42), further in particular wherein the holder (4) is permanently connected to a main machine carrier beam.

8. A method of evacuating persons from a structure with a personal rescue system (2), which personal rescue system (2) comprises a support (4) that is installed on the structure, as well as a rescue cage (6), wherein the support (4) on the structure is permanently connected to the structure and wherein the personal rescue system (2) comprises a boom (8), to the free end (10) of which the rescue cage (6) is attached, wherein, in the event of an evacuation, the boom (8) extends by itself, wherein the boom (8) comprises at least two segments (30, 32, 34), a first segment (30) of which is attached to the support (4), and in the event of an evacuation pivots away from the structure in an approximately horizontal plane.

9. The method as claimed in claim 8, **characterised in that** persons leave the structure and climb into the rescue cage (6) when the boom (8) is in a retracted starting position, and then the boom (8) extends by itself from the starting position to an extended end position and, in the end position, the boom (8) positions the rescue cage (6) at a predetermined horizontal distance (D) from the structure.

10. The method as claimed in claim 8 or 9, **characterised in that** the second segment (32) is attached to the first segment (30) and, in the event of an evacuation, pivots away from the structure in an approximately horizontal plane, or the second segment (32) extends telescopically relative to the first segment (30).

11. The method as claimed in any one of claims 8 to 10, **characterised in that** the rescue cage (6) can be folded up, wherein the rescue cage (6) can be folded up in particular in a direction which is oriented at least approximately parallel with respect to a passage direction (D) through an access door (24) of the rescue cage (6), and wherein the rescue cage (6) is unfolded in the event of an evacuation before the boom (8) is extended.

12. The method as claimed in any one of claims 8 to 10, **characterised in that** the rescue cage (6) is inflated in the event of an evacuation, in particular wherein the rescue cage (6) is self-inflatable.

13. The method as claimed in any one of claims 8 to 12, **characterised in that** a cable winch (26) with a winch cable is included, which cable winch (26) is mounted to the free end (10) of the boom (8), or the winch cable of which is guided over a direction change device that is present at the free end (10) of the boom (8), wherein, in the event of an evacuation, the rescue cage (6) which is attached to a free end (10) of the winch cable of the cable winch (26) is lowered with the aid of the cable winch (26) after the boom (8) has been extended.

## Revendications

1. Système de sauvetage de personnes (2) destiné à l'évacuation de personnes hors d'un ouvrage de construction, comprenant une fixation (4) installée côté ouvrage de construction et une cage de sauvetage (6), dans lequel la fixation (4) côté ouvrage de construction est reliée de manière permanente à l'ouvrage de construction et comprend un bras (8), sur l'extrémité libre (10) duquel la cage de sauvetage (6) est fixée, dans lequel le bras (8) est configuré de manière automotrice et comprend au moins deux segments (30, 32, 34), dont un premier segment (30) est fixé sur la fixation (4) de manière à s'éloigner par pivotement de l'ouvrage de construction dans un plan approximativement horizontal.

2. Système de sauvetage de personnes (2) selon la revendication 1, **caractérisé en ce que** le bras (8) peut être déplacé entre une position de départ rentrée et une position finale sortie et est configuré pour sortir automatiquement de la position de départ en direction de la position finale, dans lequel le bras (8) positionne, dans la position finale, la cage de sauvetage (6) à une distance horizontale (D) prédéfinie de l'ouvrage de construction.

3. Système de sauvetage de personnes (2) selon la revendication 1 ou 2, **caractérisé en ce que** le deuxième segment (32) est fixé sur le premier segment (30) de manière à pouvoir pivoter dans un plan approximativement horizontal ou le deuxième segment (32) peut être sorti de manière télescopique par rapport au premier segment (30).

4. Système de sauvetage de personnes (2) selon l'une quelconque des revendications 1 à 3, **caractérisé en ce que** la cage de sauvetage (6) peut être repliée, dans lequel la cage de sauvetage (6) peut être repliée en particulier dans une direction, qui est orientée de manière au moins approximativement parallèle par rapport à une direction de passage (R) à travers une porte d'accès (24) de la cage de sauvetage (6).

5. Système de sauvetage de personnes (2) selon l'une quelconque des revendications 1 à 3, **caractérisé en ce que** la cage de sauvetage (6) est gonflable, en particulier est autogonflable.

6. Système de sauvetage de personnes (2) selon l'une quelconque des revendications 1 à 5, **caractérisé en ce qu'**un treuil à câble (26) avec un câble de treuil est compris, lequel est monté sur l'extrémité libre (10) du bras (8) ou dont le câble de treuil est guidé par l'intermédiaire d'un dispositif de renvoi présent sur l'extrémité libre (10) du bras (8), dans lequel la cage de sauvetage (6) est fixée sur une extrémité libre (10) du câble de treuil du treuil à câble (26) et la cage de sauvetage (6) peut être abaissée à l'aide du treuil à câble (26) .

7. Eolienne (40) avec un système de sauvetage de personnes (2) selon l'une quelconque des revendications 1 à 6 pour l'évacuation de personnes hors de l'éolienne (40), dans laquelle la fixation (4) est reliée de manière permanente à l'éolienne (40), en particulier à un composant de support de la nacelle (42), en particulier en outre à un support de machine principal.

8. Procédé d'évacuation de personnes hors d'un ouvrage de construction avec un système de sauvetage de personnes (2), lequel comprend une fixation (4) installée côté ouvrage de construction et une cage de sauvetage (6), dans lequel la fixation (4) côté ouvrage de construction est reliée de manière permanente à l'ouvrage de construction et le système de sauvetage de personnes (2) comprend un bras (8), sur l'extrémité libre (10) duquel la cage de sauvetage (6) est fixée, dans lequel, dans le cas de l'évacuation, le bras (8) sort de manière autonome, dans lequel le bras (8) comprend au moins deux segments (30, 32, 34), dont un premier segment (30) est fixé sur la fixation (4) et pivote, dans le cas de l'évacuation, de manière à s'éloigner de l'ouvrage de construction dans un plan approximativement horizontal.

9. Procédé selon la revendication 8, **caractérisé en ce que** des personnes quittent l'ouvrage de construction et montent dans la cage de sauvetage (6) lorsque le bras (8) se trouve dans une position de départ rentrée, puis le bras (8) sort de manière autonome de la position de départ dans une position finale sortie et le bras (8) positionne, dans la position finale, la cage de sauvetage (6) à une distance horizontale (D) prédéfinie de l'ouvrage de construction.

10. Procédé selon la revendication 8 ou 9, **caractérisé en ce que** le deuxième segment (32) est fixé sur le premier segment (30) et, dans le cas de l'évacuation, pivote de manière à s'éloigner de l'ouvrage de construction dans un plan approximativement horizontal ou le deuxième segment (32) sort de manière télescopique par rapport au premier segment (30).

11. Procédé selon l'une quelconque des revendications 8 à 10, **caractérisé en ce que** la cage de sauvetage (6) peut être repliée, dans lequel la cage de sauvetage (6) peut être repliée en particulier dans une direction, qui est orientée de manière au moins approximativement parallèle par rapport à une direction de passage (D) à travers une porte d'accès (24) de la cage de sauvetage (6), et dans lequel la cage de sauvetage (6) est dépliée dans le cas de l'évacuation avant que le bras (8) ne sorte.

12. Procédé selon l'une quelconque des revendications 8 à 10, **caractérisé en ce que** la cage de sauvetage (6) est gonflée dans le cas de l'évacuation, dans lequel la cage de sauvetage (6) est en particulier autogonflable.

13. Procédé selon l'une quelconque des revendications 8 à 12, **caractérisé en ce qu'**un treuil à câble (26) avec un câble de treuil est compris, lequel est monté sur l'extrémité libre (10) du bras (8) ou dont le câble de treuil est guidé par l'intermédiaire d'un dispositif de renvoi présent sur l'extrémité libre (10) du bras (8), dans lequel, dans le cas de l'évacuation, la cage de sauvetage (6) fixée sur une extrémité libre (10) du câble de treuil du treuil à câble (26) est abaissée à l'aide du treuil à câble (26) après que le bras (8) a été sorti.
